# EUROPEAN PATENT APPLICATION

(11) **EP 4 389 944 A1**
(43) Date of publication of application: **26.06.2024**
(21) Application number: 22216614.2
(22) Date of filing: 23.12.2022
(51) Int. Cl.: C25F 5/00, C01B 32/194, C25B 1/04

(54) **ELECTROCHEMICAL METHOD FOR PRODUCING A NANO- OR MICRO-SHEET ELEMENT USING AN ELECTROLYTE MEMBRANE**

(71) Applicant: ETH Zurich, 8092 Zürich (CH)
(72) Inventor: THODKAR, Kishan, 8200 Schaffhausen (CH)

(57) **Abstract**

A method for producing a nano- or micro-sheet element is provided, the nano- or micro-sheet element particularly being made of graphene and/or other sheet-materials. The method is based on a laminate (14) comprising at least a growth substrate (1) and a nano- or micro-sheet layer (2). The nano- or micro-sheet layer (2) is adapted to form the nano- or micro-sheet element. The method comprises at least the step of electrochemical delamination of the laminate (14) by means of electrolysis in such a way, that the growth substrate (1) is separated from the nano- or micro-sheet layer (2). In the electrochemical delamination of the laminate (14), a gas diffusion electrode (21) attached to the nano- or micro-sheet layer (2) is used as an anode and an electrolyte membrane, in particular a polymer electrolyte membrane (20), is arranged between the gas diffusion electrode (21) and the nano- or micro-sheet layer (2).

## Description

### TECHNICAL FIELD

The present invention relates to a method for producing a nano- or micro-sheet element, the nano- or micro-sheet element particularly being made of graphene and/or other sheet-materials, such as metal thin films, nano-structures and insulating thin films.

This project leading to this application has received funding from the European Union's Horizon 2020 research and innovation program under the Marie Sklodowska-Curie grant agreement No 101025295.

### PRIOR ART

Graphene is a material formed by only a single layer of carbon atoms that are covalently bonded together in a repeating pattern of hexagons. In particular due to its high mechanical strength as well as due to its excellent thermal and electrical conductivity, but also due to many other extraordinary properties, graphene is increasingly used in many electronic devices such as biosensors, transistors and integrated circuits, e.g. CMOS-based microchips. Applications for which such graphene devices can be used include for example consumer electronics, medical technology, automotive engineering, optics, telecommunications, batteries, space technology, and many more.

The application and utilization of graphene and of layered materials has been the subject of much academic research and development. Great progress has been made in this area recently. However, the industrial production and commercialization of applications utilizing graphene and/or other types of thin sheet materials is proceeding slowly and faces several challenges. A primary reason for the slow transition towards applications is due to the numerous challenges faced during the transfer of such thin sheet materials from their growth substrate to the target substrate.

In a usual production process, the thin sheet material are synthesized on growth substrates made of metal using a chemical vapor deposition process. Currently, the prominent approach to transfer the thin sheet materials from the growth substrate to the target device is via growth substrate etching. The use of a metal substrate etching technique for fabricating graphene-based transistors is for example disclosed in EP 2 679 540 A1, EP 2 937 313 A1, EP 3 135 631 A1 and US 2017/0365477 A1. The approach of growth substrate etching has disadvantages, because it leads to i) polymer contamination of the thin sheet materials, ii) dissolution & thereby the loss of the growth substrate, iii) influences the process reproducibility, and iv) generates toxic chemical byproducts. Moreover, the etching process is time-consuming, meaning that it can take up-to 3 to 4 hours to etch a copper foil having a thickness of approx. ~25 µm (area ~4cm²) using a 50 mM of ammonium persulphate-based copper etchant solution. These factors can primarily affect the electronic properties of the final device and have significantly affected the attractiveness of their commercial exploitation.

A possible, but in practice not suitable way to delaminate the thin sheet material from the growth substrate is by means of a physical peel-off. However, under low film thickness conditions, a physical peel-off is not feasible, as it can lead to sample damage and the thin films can adhere to their growth substrates. In US 2020/0387073 A1, a delamination method is disclosed which is based on a physical separation of the respective layer in combination with a water penetration effect.

An alternative approach is the use of an electrochemical process by means of electrolysis to achieve the rapid release of the thin sheet materials from their growth substrates. The electrolysis cell used in the electrochemical process usually comprises an anode, a cathode and an electrolyte reagent, i.e. an electrolyte. The cathode of the cell can e.g. be formed by a thin sheet material arranged on the growth substrate. A direct voltage is applied to the electrolysis cell to initiate the electrolysis process. An electrolyte reagent such as sodium hydroxide, sodium persulphate, sodium chloride, or potassium persulphate can be used during the process. During the electrolysis process, protons can diffuse through the thin sheet material or percolate from the sides to form hydrogen bubbles at the interface of the growth substrate and the thin sheet material of the electrolytic cell thereby providing a delaminating effect, which leads to the detachment of the thin sheet material from its growth substrate. The use of electrochemical delamination via an electrolysis process is a viable technique to rapidly release thin sheet material films from their growth substrates within a few minutes only. Thus, delamination of the thin sheet material from the growth substrate by means of electrolysis is a particularly fast technique to transfer 2D thin materials from their growth substrates to the target device. Electrochemical delamination by means of electrolysis is for example disclosed in WO 2022/096640 A1, US 2015/068684 A1, CN 110581063 A and CN 111232964 A. Further prior art documents that disclose a graphene electrochemical transfer method are US 2020/0235212 A1, US 2014/0238873 A1, US 2017/0361599 A1 and US 2014/0130972 A1.

The electrochemical delamination by means of an electrolysis using a liquid electrolyte has the drawback that the nano- or micro-sheet element, which can be made of graphene for example, can be contaminated on a nano or micro scale by substances of the electrolyte. Such a contamination can inhibit the integration of the nano- or micro-sheet element in the target device and/or degrade the performance of the final device. Moreover, for immersing the laminate into the liquid electrolyte, a relatively large amount of liquid electrolyte is required, which not only complicates the handling, but also affects the production costs and results in excessive waste.

### SUMMARY OF THE INVENTION

It is an object of the current invention to provide a method, which enables efficient production of a nano- or micro-sheet element with high quality.

This object is solved by the method as claimed in claim 1. Further embodiments of the method are provided in the dependent claims.

The present invention thus provides a method for producing a nano- or micro-sheet element, the nano- or micro-sheet element particularly being made of graphene and/or other sheet-materials, such as metal thin-films, nano-structures and insulating thin films, on the basis of a laminate comprising at least a growth substrate and a nano- or micro-sheet layer, the nano- or micro-sheet layer being adapted to form the nano- or micro-sheet element. The method comprises at least the step of electrochemical delamination of the laminate by means of electrolysis in such a way, that the growth substrate is separated from the nano- or micro-sheet layer.

In the step of electrochemical delamination of the laminate, a gas diffusion electrode attached to the nano- or micro-sheet layer is used as an anode and an electrolyte membrane, in particular a polymer electrolyte membrane, is arranged between the gas diffusion electrode and the nano- or micro-sheet layer.

For the electrolysis, the electrolyte membrane thus has the function of the electrolyte. By using an electrolyte membrane, i.e. a solid electrolyte, for the electrochemical delamination, the drawbacks associated with the usually used liquid electrolyte can be largely avoided or at least reduced. Due to the use of the electrolyte membrane, the contamination of the nano- or micro-sheet layer with substances of the electrolyte during the electrochemical delamination is largely reduced. As a result, nano- or micro-sheet elements can be produced not only efficiently and on a large-scale in terms of industrial production, but also with a particular high quality. In addition, the handling of the laminate and the components used for the electrolysis is facilitated by the use of an electrolyte membrane. Furthermore, excessive waste and production costs are significantly reduced in comparison to an electrolysis with a liquid electrolyte.

For carrying out the electrolysis, an electric voltage is applied between the gas diffusion electrode, which form the anode, and a cathode. During the electrolysis process, gas bubbles, in particular hydrogen bubbles, are preferably formed at the interface between the nano- or micro-sheet layer and the growth substrate, which leads to a detachment of the nano- or micro-sheet layer from the growth substrate.

The gas diffusion electrode is preferably made of a porous or gas permeable material, in order to allow a certain gas exchange to take place through the electrode. A gas exchange preferably also takes place through the electrolyte membrane and/or through the nano- or micro-sheet layer during the electrochemical delamination. Thus, the electrolyte membrane and the nano- or micro-sheet layer are preferably made of a porous or gas permeable material.

The electrolyte membrane can have a thickness, usually an average or median thickness, in a nanometer- or micrometer-range. During the electrolysis, the electrolyte membrane is preferably attached to the nano- or micro-sheet layer. The electrolyte membrane can have the same size and/or structure in terms of area as the nano- or micro-sheet layer. The electrolyte membrane preferably forms a solid, structurally stable component. A certain bending of the membrane can be possible depending on the embodiment.

The gas diffusion electrode, which has the function of the anode during the electrolysis, is preferably made of a metal. During the electrolysis, the gas diffusion electrode is preferably attached, in particular directly attached, to the electrolyte membrane. The gas diffusion electrode can have the same size and/or structure in terms of area as the electrolyte membrane and/or the nano- or micro-sheet layer. The gas diffusion electrode preferably forms a solid, structurally stable component.

In the context of the present document, a nano- or micro-sheet element is considered to be a ready-made component which is part or suited to be part of a target device. In contrast, the nano- or micro-sheet layer refers to the material that is prepared to form one or a plurality of such nano- or micro-sheet elements. Thus, the nano- or micro-sheet layer, even when separated from the growth substrate, usually does not yet represent the respective ready-made component. Further processing steps are usually required to come from the nano- or micro-sheet layer to the nano- or micro-sheet element. Such processing steps can for example concern a cutting, resizing, deforming or shaping of the nano- or micro-sheet layer. In some, but certainly not all embodiments, the nano- or micro-sheet layer can correspond to the nano- or micro-sheet element already during the step of electrochemical delamination.

An element is considered to be a nano- or micro-sheet element, if its thickness, usually its average or median thickness, is in a nanometer- or micrometer-range. The nanometer-range concerns a range of 0.1 - 1000 nm, the micrometer-range a range of 0.1 - 1000 µm. Thus, the nano- or micro-sheet element and/or the nano- or micro-sheet layer can be formed by a single layer of carbon atoms or by a multiple layer of carbon atoms. In case of a multiple layer, the number of layers is preferably less than 1000, more preferably less than 100, even more preferably less than 10. A sheet is considered to be an element which is by an integer multiple wider and broader than thick.

The nano- or micro-sheet element is preferably a functional element of an electronic device, such as a biosensor, a transistor of an integrated circuit, e.g. a CMOS-based microchip. The electronic device can particularly be adapted to be used for consumer electronics, medical technology, automotive engineering, optics, telecommunications, batteries, space technology. For example, it can be a Hall sensor, a capacitor, in particular a super capacitor, an optoelectronic display, a current sensor or a conducting layer to be used in e.g. injection molded electronics, transparent, wearable and/or flexible electronics. The nano- or micro-sheet element can also be used as part of a coating, such as e.g. a glass coating, or an anti-corrosion coating, or an anti-radiation coating, or a heat dissipation coating, or a hydrophobic/hydrophilic coating.

The nano- or micro-sheet layer and the nano- or micro-sheet element are preferably, but not necessarily made of graphene. In certain embodiments, the nano- or micro-sheet layer and the nano- or micro-sheet element could for example also be made of hexagonal boron nitride or from any other material. Alternatively, the nano- or micro-sheet layer and the nano- or micro-sheet element could also be made of other thin sheet materials, such as thin films, herein referred to fragile plastic films, polymer films, thermally evaporated or sputter deposited thin metal films, micro-stamps, micro-molds, micro-patterns (deposited via catalytic printing) of polymer films or plastic films, which also require delamination from their growth substrate.

The laminate, on which the method is based, comprises at least the growth substrate and the nano- or micro-sheet layer and, preferably, a support layer. Thus, the laminate forms the basis or, in other words, the basic component for the production of the nano- or micro-sheet element. The laminate is provided or produced before carrying out the method as indicated. Of course, it is also possible that a plurality of nano- or micro-sheet elements are produced with this method.

It is possible that in addition to the growth substrate, the nano- or micro-sheet layer and preferably the support layer, one or more additional layers are present in the laminate. If a support layer is present, the nano- or micro-sheet layer is preferably arranged between the growth substrate and the support layer. Prior to delamination, the layers of the laminate are usually bonded together over their entire surface. The nano- or micro-sheet layer is preferably attached, usually directly, to the growth substrate. The support layer, if present, is preferably attached, directly or indirectly, to the nano- or micro-sheet layer. The laminate preferably has the form of a wafer as it is often used in the semiconductor-industry.

The electrochemical delamination of the laminate by means of electrolysis usually leads to the forming of hydrogen bubbles between the growth substrate and the nano- or micro-sheet layer, which causes a delaminating effect between the respective layers.

The nano- or micro-sheet layer can have a uniform thickness over its entire surface or it can be structured to have local elevations and/or depressions. The depressions can be non-through-going or through-going, i.e. have the form of apertures in the latter case. The structure can particularly be provided, in order to distinguish or separate a plurality of nano- or micro-sheet elements that are formed by the nano- or micro-sheet layer. The structure can be provided to the nano- or micro-sheet layer for example by means of laser ablation or laser cutting or UV lithography or physical placement.

The method can comprise the additional step of applying the nano- or micro-sheet layer to the growth substrate, which can for example be carried out by means of chemical vapour deposition, physical sputtering or electrodeposition, spin coating or screen-printing or adhesive tape or physical placement or drop casting.

The method can also comprise the further step of applying the support layer to the nano- or micro-sheet layer, which can for example be done by means of spin coating, screen printing, adhesive tape or physical placement. The support layer is preferably made of a polymer or a plastic material.

The support layer preferably has the function to adhere and support the nano- or micro-sheet layer during a subsequent transfer after the electrochemical delamination to a target substrate. Thus, the support layer provides structural stability to the nano- or micro-sheet layer. For this purpose, the support layer has an inherent stability, which means that the support layer does not collapse or bend when held at the edge and lifted. Due to its very small thickness, the nano- or micro-sheet layer usually does not have an inherent stability.

The growth substrate, which is preferably made of a metal, such as e.g. copper, platinum or nickel concerns a substrate on which the nano- or micro-sheet layer is e.g. synthesized, applied and/or realized.

In a particularly preferred embodiment, the method comprises the additional step that, after the step of electrochemical delamination, the nano- or micro-sheet layer, preferably together with a support layer, is transferred and preferably attached to a target substrate. The target substrate is preferably adapted to form the final device, in which the nano- or micro-sheet element (formed by the nano- or micro-sheet layer) is used and performs its function. If a support layer is provided, the nano- or micro-sheet layer and the support layer are preferably still attached, in particular bonded, to each other during the transfer, but separate from the growth substrate. For attaching the nano- or micro sheet layer to the target substrate, thermal annealing is preferably applied.

The target substrate can for example be made of glass, polyimide or plastic. It can be in the form of e.g. an integrated chip or a flexible substrate. In a particularly preferred embodiment, the target substrate has one or more electrical contacts. In this case, the nano- or micro-sheet layer is attached such to the target substrate, that it connects these electrical contacts. The target substrate can have a structure, which can, but does not need to correspond to the design of the nano- or micro-sheet layer. If the target substrate has a structure, it can form one or more depressions, which serve to suspend the nano- or micro-sheet layer. The one or more depressions can particularly serve to suspend the nano- or micro-sheet layer between two or more electrical contacts of the target substrate. In this case, each of the electrical contacts are preferably arranged on a local elevation formed in the surface of the target substrate, or the electrical contacts themselves form a local elevation in each case. With "suspending", it is meant that the nano- or micro-sheet layer is spanned over the respective depression of the target substrate, i.e. that the nano- or micro-sheet layer is not in contact with the bottom of the depression.

An image recognition and alignment system can be used, in order to align the nano- or micro-sheet layer and, if provided, the support layer with the target substrate. In this way, the nano- or micro-sheet layer can be positioned correctly and automatically on the target substrate.

The image recognition and alignment system, if present, preferably comprises at least one camera, which is directed towards the nano- or micro-sheet layer and/or towards the target substrate during the transfer.

The target substrate can comprise one or several microchips. The microchip can particularly be electrically connected to electrical contacts, which are provided on the target substrate and preferably serve to be contacted by the nano- or micro-sheet layer or element. The microchip can for example have the function of a computing, sensing and/or controlling unit.

In a preferred further step of the method, the support layer, if present, is removed from the nano- or micro-sheet layer after the transfer. The removal can be effected for example by a physical removal, e.g. a peel off, or by means of etching, or by solvent assisted dissolution.

In a particularly preferred embodiment, the electrolyte membrane has a design with at least two separate membrane elements. The design with the at least two separate membrane elements can particularly correspond to the design of the nano- or micro-sheet element. By providing at least two separate membrane elements, it is possible for the electrical charges during the electrolysis to reach only certain areas of the nano- or micro-sheet layer. As a result, the nano- or micro-sheet layer is only separated from the growth substrate in these areas. In this way, the final design of the nano- or micro-sheet element can be predetermined by the design of the electrolyte membrane, which is a general further advantage of the method as indicated.

Alternatively or in addition, the gas diffusion electrode can also have a design with at least two separate anode elements, which can particularly correspond to the design of the nano- or micro-sheet element. In combination with an also corresponding design of an electrolyte membrane having at least two separate membrane elements or even with any different design of an electrolyte membrane, a separation of the nano- or micro-sheet layer from the growth substrate in only some predetermined and well-defined areas can be achieved. Thus, the final design of the nano- or micro-sheet element can be predetermined by the design of the electrolyte membrane and/or by the design of the electrolyte membrane.

In a preferred embodiment, a holder is attached to the gas diffusion electrode during the electrochemical delamination of the laminate. The holder preferably has a porosity and/or permeability, in order to allow a liquid, in particular water, to pass through the holder to the gas diffusion electrode. The design of the holder can correspond to the design of the gas diffusion electrode and/or to the design of the electrolyte membrane.

Particularly preferred is an embodiment, in which the growth substrate forms the cathode during the electrochemical delamination of the laminate. The growth substrate is preferably made of a metal, in particular copper, for this purpose. With the delamination by means of electrolysis, the growth substrate is usually not dissolved and can be re-used several times.

Preferably, an electrolysis of water is carried out during the electrochemical delamination of the laminate, not only because water is a readily available and easily manageable raw material, but also because the electrochemical principles and realization is well known and easy to implement for the skilled person. The separation of the nano- or micro-sheet layer from the growth substrate is then effected due to the formation of hydrogen bubbles in the respective area.

After the step of electrochemical delamination, the nano- or micro-sheet layer can be transferred to a target substrate, which is preferably carried out by means of a pickup element. The pickup element can comprise a forklift. The pickup element, in particular the forklift, is advantageously sized and adapted to the nano- or micro-sheet layer in such a way that it can grasp and lift the nano- or micro-sheet layer and transfer it to the target substrate. The forklift preferably has a C-shaped portion which serves as a contact and pick up point for the nano- or micro-sheet layer and advantageously extends horizontally during the transfer. Instead of a forklift, the pickup element can also comprise a portion with a single extension or with more than two parallel or non-parallel extensions that serve as a contact and pick up point for the nano- or micro-sheet layer and advantageously extend horizontally during the transfer

The pickup element, in particular the forklift and more particularly the C-shaped portion thereof, preferably comprises magnetic elements, in particular electromagnetic elements, and/or air suction elements for picking up the nano- or micro-sheet layer and the support layer. In the case that the pickup element, in particular the forklift, comprises magnetic elements, the nano- or micro-sheet layer or, more preferred, the support layer comprises corresponding elements, which are e.g. ferromagnetic and serve to be attracted and engaged by the magnetic elements of the pickup element.

The same or a further pickup element, in particular forklift, can also be used for the handling of the target substrate with the attached nano- or micro-sheet layer, e.g. for the removal of the support layer and/or of a polymer layer (see below).

For transferring the nano- or micro-sheet layer, i.e. the thin sheet material or thin films, to the target substrate, the nano- or micro-sheet layer must be given some structural stability, which is preferably achieved by the attachment of the support layer to the nano- or micro-sheet layer. The support layer is used for the transfer and removed after the attachment of the nano- or micro-sheet layer to the target substrate.

With regard to the transfer process, a support layer is preferably provided which is patterned, meaning that the surface of the support layer is physically structured with a plurality of depressions and/or elevations. The pattern of the support layer can be produced after separation of the nano- or micro-sheet layer from the growth substrate by means of e.g. lithography in combination with etching techniques. In certain embodiments, the pattern of the support layer corresponds to the design of the nano- or micro-sheet layer.

In a particularly preferred embodiment, however, a patterning of the support layer, in particular a lithographic patterning of a support layer or a direct placement of a pre-patterned support layer, is carried out prior to the step of electrochemical delamination. Thus, the step of electrochemical delamination of the laminate is preferably carried out with the support layer already having a pattern with a plurality of local depressions and/or elevations.

In other words, the support layer is preferably pre-patterned prior to the step of electrochemical delamination. The use of a pre-patterned support layer in combination with a delamination by means of electrolysis enables a particularly fast production of a large number of nano- or micro-sheet element with a high quality. The pre-patterning of the support layer is usually carried out with the support layer being attached, via the nano- or micro-sheet layer, to the growth substrate, which substantially facilitates the handling of the device as compared to a post-patterning of the support layer after its removal from the growth substrate. Also, if the patterning can already be carried out, when the support layer is still on the growth substrate or even before, considerable time savings are possible for transferring the nano- or micro-sheet layer from the growth substrate to the target substrate. In this case, the support layer can be used to align the nano- or micro-sheet layer with the target substrate. Since the substrate layer is already patterned during the step of electrochemical delamination, the pattern is immediately available, when the nano- or micro-sheet layer and the support layer are separate from the growth substrate. For example, an image recognition and alignment system can be used, in order to detect the pattern of the substrate layer and to align the nano- or micro-sheet layer and the support layer with the target substrate. In this way, the nano- or micro-sheet layer can be positioned correctly and automatically on the target substrate. If the nano- or micro-sheet layer that is attached to the growth substrate is adapted to form a plurality of nano- or micro-sheet elements, the advantages of patterning the support layer before the electrochemical delamination are particularly pronounced.

If the patterning of the support layer is carried out by means of lithographic patterning, it can particularly be an ultra violet (UV)-lithographic patterning. Lithographic techniques allow for patterning of the support layer directly on the nano- or micro-sheet layer present on the growth substrate. Alternatively or additionally, the patterning can also be effected by means of laser ablation or laser cutting, or it can be due to a particular physical placement of one or several parts of the support layer on the nano- or micro-sheet layer. Yet alternatively or additionally, pre-patterned support layers can be adhered directly onto the nano- or micro-sheet layer on the growth substrate with the help of thermal heating.

The plurality of local depressions and/or elevations of the pattern of the support layer can be in the form of non-through-going or through-going apertures. If they are in the form of through-going apertures, the bottoms of the local depressions can be formed by an adjacent layer in each case, such as e.g. by the nano- or micro-sheet layer.

There are various reasons for having a patterned support layer. For example, a patterning of the support layer can be used as a marker for the correct positioning of the nano- or micro-sheet layer on the target substrate and/or to align the nano- or micro-sheet layer with certain functional feature of the target substrate. In some applications, the pattern is in the form of through-going apertures, which are likewise provided in the nano- or micro-sheet layer, which might be needed for e.g. the particular function of the nano- or micro-sheet layer at the target device. Through-going apertures might also be present in the nano- or micro-sheet layer, in order to separate multiple nano- or micro-sheet elements from each other that are provided on the nano- or micro-sheet layer. Only one of these nano- or micro-sheet elements might then be used for each target device. Thus, the pattern in the form of through-going or non-through-going apertures might have the function of a perforation. A pattern in the form of through-going apertures can thus be provided to assign an isolated part of the nano- or micro-sheet layer to each of a plurality of target devices and/or to each of a plurality of functional parts of a single target device. In the case, where the target device has electrical contacts to be contacted by the nano- or micro-sheet element, the nano- or micro-sheet layer might be patterned, in order to correctly connect these contacts. The pattern of the support layer might then serve as a marker for correctly positioning the nano- or micro-sheet layer on the contacts of the target substrate.

The electrochemical delamination by means of electrolysis in combination with the pre-patterning of the support layer is advantageous, because the delamination process is usually not affected by the pattern of the support layer. A reduced thickness or even absence of the support layer at some locations due to the pattern usually does not have any influence on the delamination process in this case. Other methods such as an etching of the growth substrate or a physical peel-off would require considerably more time and the locally reduced thickness of the support layer due to the pattern could lead to problems.

In a particularly preferred embodiment, a polymer layer is arranged between the nano- or micro-sheet layer and the support layer. The polymer layer can be made of a different or the same material as support layer. It can particularly be made of a plastic material. The method can comprise the additional step of affixing the polymer layer to the nano- or micro-sheet layer, which can for example be effected by means of spin coating, screen printing, adhesive tape or physical placement. The polymer layer is preferably affixed to the nano- or micro-sheet layer before the step of electrochemical delamination. The polymer layer can for example have the function to provide additional structural stability to the nano- or micro-sheet layer and the support layer or it can be provided to achieve the bonding between the nano- or micro-sheet layer and the support layer. In some embodiments, the polymer layer can also be provided, in order to fulfil a certain function in the final device.

The polymer layer can have a uniform thickness, i.e. no pattern, or it can have a different or the same pattern as the support layer. The pattern of the polymer layer is preferably formed by a plurality of local elevations and/or depressions, which can be non-through-going or through-going. The pattern of the polymer layer can be provided for example by means of laser ablation, laser cutting, UV lithography or by direct stamping.

The polymer layer is preferably, but not necessarily, removed from nano- or micro-sheet layer after the transfer. The removal can be effected for example by a physical removal, e.g. a peel off, or by means of etching or by dissolution in solvents.

In addition or alternatively to the polymer layer, an arbitrary number of further layers can be provided between the nano- or micro-sheet layer and the support layer. The further layer, as well as the polymer layer, are preferably transferred with the nano- or micro-sheet layer to the target substrate. The further layers and the polymer layer can be structured such as to correspond to the pattern of the support layer and/or to the structure of the nano- or micro-sheet layer.

In a preferred embodiment, one or several spacer elements, marker elements, gaskets and/or magnetic pickup elements are attached to the support layer. The one or several spacer elements, marker elements, gaskets and/or magnetic pickup elements are particularly useful with regard to the transfer of the nano- or micro-sheet layer and of the support layer to the target substrate. For example, maker elements that are attached to the support layer can be used by an image recognition and alignment system, in order to align the support layer and, thus, the nano- or micro-sheet layer with the target substrate. Further marker elements can be provided on the target substrate, in order to be used by the image recognition and alignment system for the same purpose. In this case, it is possible to align the marker elements on the support layer with the ones of the target substrate during the transfer, in order to correctly position the nano- or micro-sheet layer on the target substrate.

In other embodiments, a frame can be attached to the support layer. The frame can for example surround the support layer in the area of the nano- or micro-sheet element. The frame can for example serve to provide additional stability or it can serve to facilitate the handling by means of the forklift or another device.

In some embodiments, the nano- or micro-sheet layer can be a heterostructure formed by a stack of a plurality of sublayers. Alternatively or in addition, the nano- or micro-sheet element can be a heterostructure formed by a stack of a plurality of sublayers and the method comprises the further step of stacking the nano- or micro-sheet layer on at least one other nano- or micro-sheet layer. The sublayers of the heterostructure are preferably two-dimensionally extending, i.e. sheet-like, crystals in each case. The heterostructure formed by a stack of a plurality of sublayers is often referred to by the skilled person as van der Waals heterostructure. In some embodiments, the sublayers of the heterostructure can all be made of the same material and in particular all have the same crystalline structure. In other embodiments, the sublayers of the heterostructure can be made of different materials and/or have different crystalline structures. For example, some of the sublayers can be made of graphene and others can be made of hexagonal boron nitride or of another material. The nano- or micro-sheet layer and/or the nano- or micro-sheet element can particularly be made with the help of die-by-die transfer. In this case, the plurality of sublayers can be assembled to form a heterostructure by means of die transfers, in which each sublayer or subset of sublayers is transferred in a separate die, in order to be stacked on one or a plurality of other sublayers.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1a: shows a schematic cross-sectional view through a first variant of a laminate with a growth substrate and a nano- or micro-sheet layer, when attaching a polymer electrolyte membrane and an anodic gas diffusion electrode, in order to electrochemically delaminate the laminate according to a first inventive embodiment;
- Fig. 1b: shows a schematic cross-sectional view through the laminate of Fig. 1a ready for electrochemical delamination;
- Fig. 1c: shows the nano- or micro-sheet layer attached to the target substrate, after completion of the electrochemical delamination of Fig. 1b and after removal of the support layer and the further layers;
- Fig. 2: shows a schematic cross-sectional view through a second variant of a laminate ready for electrochemical delamination;
- Fig. 3: shows a schematic cross-sectional view through a third variant of a laminate ready for electrochemical delamination according to the inventive method, with the nano- or micro-sheet layer and the growth substrate being separated from the other layers for illustrative reasons;
- Fig. 4a: shows a schematic cross-sectional view through a fourth variant of a laminate prior to electrochemical delamination according to the inventive method, with the nano- or micro-sheet layer and the growth substrate still being separated from the other layers;
- Fig. 4b: shows a schematic cross-sectional view through the laminate of Fig. 4a ready for electrochemical delamination, with the nano- or micro-sheet layer and the growth substrate attached to the other layers;
- Fig. 4c: shows a schematic cross-sectional view through the laminate of Fig. 4a after electrochemical delamination;
- Fig. 5a: shows a schematic cross-sectional view through a fifth variant of a laminate prior to electrochemical delamination according to the inventive method, with the nano- or micro-sheet layer and the growth substrate still being separated from the other layers;
- Fig. 5b: shows a schematic cross-sectional view through the laminate of Fig. 5a ready for electrochemical delamination, with the nano- or micro-sheet layer and the growth substrate attached to the other layers;
- Fig. 5c: shows a schematic cross-sectional view through the laminate of Fig. 5a after electrochemical delamination;
- Fig. 6a: shows a schematic cross-sectional view through a sixth variant of a laminate prior to electrochemical delamination according to the inventive method, with the nano- or micro-sheet layer and the growth substrate still being separated from the other layers;
- Fig. 6b: shows a schematic cross-sectional view through the laminate of Fig. 6a ready for electrochemical delamination, with the nano- or micro-sheet layer and the growth substrate attached to the other layers;
- Fig. 6c: shows a schematic cross-sectional view through the laminate of Fig. 6a after electrochemical delamination;
- Fig. 7: shows a schematic cross-sectional view through an seventh variant of a laminate prior to electrochemical delamination according to the inventive method, with the nano- or micro-sheet layer and the growth substrate still being separated from the other layers;
- Fig. 8: shows a schematic cross-sectional view through an eighth variant of a laminate ready for electrochemical delamination;
- Fig. 9: shows a schematic cross-sectional view through a ninth variant of a laminate ready for electrochemical delamination;
- Fig. 10: shows a schematic cross-sectional view through an tenth variant of a laminate ready for electrochemical delamination;
- Fig. 11: shows a schematic cross-sectional view through a eleventh variant of a laminate ready for electrochemical delamination;
- Fig. 12: shows a schematic cross-sectional view through a twelfth variant of a laminate ready for electrochemical delamination;
- Fig. 13a: shows a schematic perspective view of a first variant of a pickup element in the form of a forklift, which can be used to transfer the nano- or micro-sheet layer and the support layer to the target substrate;
- Fig. 13b: shows the underside of the forklift of Fig. 13a, with air suction elements and electromagnetic elements;
- Fig. 14a: shows a schematic perspective view of a second variant of a pickup element in the form of a forklift, which can be used to transfer the nano- or micro-sheet layer and the support layer to the target substrate;
- Fig. 14b: shows the underside of the forklift of Fig. 14a, with air suction elements and electromagnetic elements; and
- Fig. 15: shows a schematic perspective view of an image recognition and alignment system during the transfer of the nano- or micro-sheet layer and the support layer to the target substrate by means of a forklift.

### DESCRIPTION OF PREFERRED EMBODIMENTS

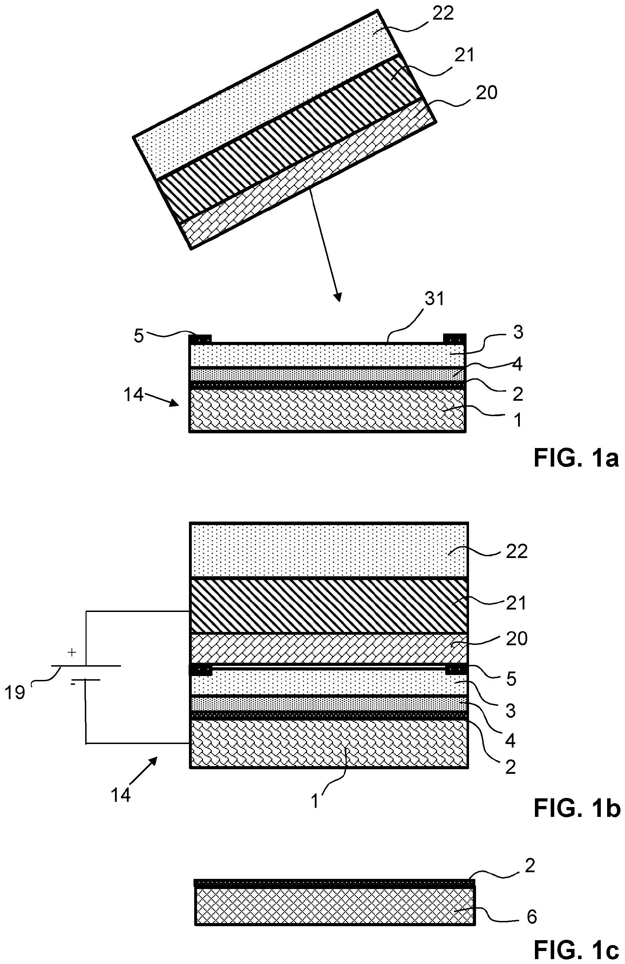

Figures 1a to 15 show a plurality of inventive embodiments of the method and the method steps as claimed. Figures 1 to 15 also show elements, components and parts that are used for carrying out the respective method or method steps. It is to be noted that the combinations of elements, components and parts as shown in the figures are merely to be understood as non-limiting examples. The individual elements, components and parts of the various embodiments as described and/or shown in the figures can basically be interchanged with each other as desired and supplemented, for example, with further elements. Elements, components and parts of different embodiments or variants, but having the same or a similar function are designated by the same reference numerals in the figures.

Figure 1a shows a laminate 14 comprising a growth substrate 1, a nano- or micro-sheet layer 2, an optional polymer layer 4 and an optional support layer 3, which are bonded together according to this order of layers and in each case over their entire surface. The growth substrate 1, which is usually made of a metal, such as e.g. copper, served for the synthesis of the nano- or micro-sheet layer 2 in a previous production step. For this purpose, the nano- or micro-sheet layer 2 could for example be applied to the growth substrate 1 by means of chemical vapor deposition or spin coating. The nano- or micro-sheet layer 2 is preferably made of graphene, but could also be made of e.g. hexagonal boron nitride or of any other material. Both the growth substrate 1 and the nano- or micro-sheet layer 2 here have a uniform thickness over their entire surfaces. The laminate 14 preferably has the form of a wafer as it is often used in the production of components of the semiconductor-industry.

The application of the support layer 3, onto the polymer layer 4 can for example be carried out by means of spin-coating or by direct placement of a support layer 3. The support layer 3 is preferably pre-patterned at the front side with a pattern 31, which is preferably done by means of UV-lithography and/or laser ablation. Alternatively, different parts of the pattern 31, e.g. a plurality of local elevations in the form of island-shaped parts, can also be placed physically on the polymer layer 4 and attached thereto for example by means of an adhesive. The pattern 31 can for example have the function of a marking, in order to facilitate the transfer and the correct positioning of the support layer 3 and the nano- or micro-sheet layer 2 onto a target substrate later on.

The polymer layer 4, which is arranged between the nano- or micro-sheet layer 2 and the support layer 3 provides rigidity to the overall structure, in particular after the delamination of the growth substrate 1 later on. It also increases the overall thickness of the laminate 14, which facilitates the handling of the laminate 14 especially after removal of the growth substrate 1. The polymer layer 4 can also serve to protect the nano- or micro-sheet layer 2 from external influences. The application of the polymer layer 4 onto the nano- or micro-sheet layer 2 can for example be carried out by means of spin-coating, spray-coating or by means of direct placement of such a polymer layer 4.

In the embodiment of figure 1a, spacer elements 5 are provided on the front surface of the support layer 3. The spacer elements 5, which can for example be made of a plastic material, serve to facilitate the pick-up and/or the lifting of the sample after delamination of the growth substrate 1. Alternatively or in addition, the spacer elements 5 can serve to facilitate removal of the polymer electrolyte membrane 20, which is described further below, from the laminate 14. Depending on the embodiment, the spacer elements 5 can be in the form of a plurality of small, cube-shaped elements or they can be in the form of a single frame surrounding the front surface of the support layer 3.

Instead or in addition to spacer elements 5, marker elements, gaskets and/or magnetic pickup elements could also be provided on the front surface of the support layer 3. The marker elements, gaskets and/or magnetic pickup elements can have the same or different shapes as the spacer elements 5.

In order to remove the growth substrate 1 from the laminate 14, electrochemical delamination by means of electrolysis is applied. For this purpose, a polymer electrolyte membrane 20 and an anodic gas diffusion electrode 21 are attached to the support layer 3, as it is shown in figure 1a. Via the support layer 3 and the polymer layer 4, the polymer electrolyte membrane 20 and the anodic gas diffusion electrode 21 are attached to the nano- or micro-sheet layer 2 during the electrochemical delamination of the laminate 14 (figure 1b). With "attached" it is meant, that the polymer electrolyte membrane 20 and the anodic gas diffusion electrode 21 are fixed in their positions with respect to the nano- or micro-sheet layer 2 during the process of electrochemical delamination.

The polymer electrolyte membrane 20 and the anodic gas diffusion electrode 21 are held by a holder 22. The holder 22 holds the anodic gas diffusion electrode 21 at its upper side. The holder 22 is made of a soft or rigid material, such as polydimethylsiloxane (PDMS) and has a certain porosity and/or permeability, such that a liquid, e.g. water (H₂O), can pass through the holder 22, in order to enable the electrolysis.

For electrochemical delamination, i.e. for separating the growth substrate 1 from the laminate 14 and in particular from the nano- or micro-sheet layer 2, preferably an electrolysis of water is carried out. For the electrolysis, a voltage difference between the anodic gas diffusion electrode 21, i.e. the anode, and the growth substrate 1, which forms the cathode is applied by means of a power supply 19. Due to this voltage difference, water (H₂O) molecules pass from the environment through the holder 22 and through the anodic gas diffusion electrode 21, where the molecules split up into hydrogen ions (H⁺) and oxygen ions (O²⁻). From the anodic gas diffusion electrode 21, the generated hydrogen ions pass through the electrolyte membrane 20, through the support layer 3, through the polymer layer 4 and through the nano- or micro-sheet layer 2 in the direction towards the growth substrate 1. At the interface between the growth substrate 1 and the nano- or micro-sheet layer 2, hydrogen bubbles are formed, which causes a delaminating effect between these two layers. In this way, the growth substrate 1 is separated from the nano- or micro-sheet layer 2 in a particularly short time without destroying the growth substrate 1 and without leaving impurities on the nano- or micro-sheet layer 2. Since the growth substrate 1 remains intact, it can be re-used, e.g. for the synthesis of a further nano- or micro-sheet layer 2.

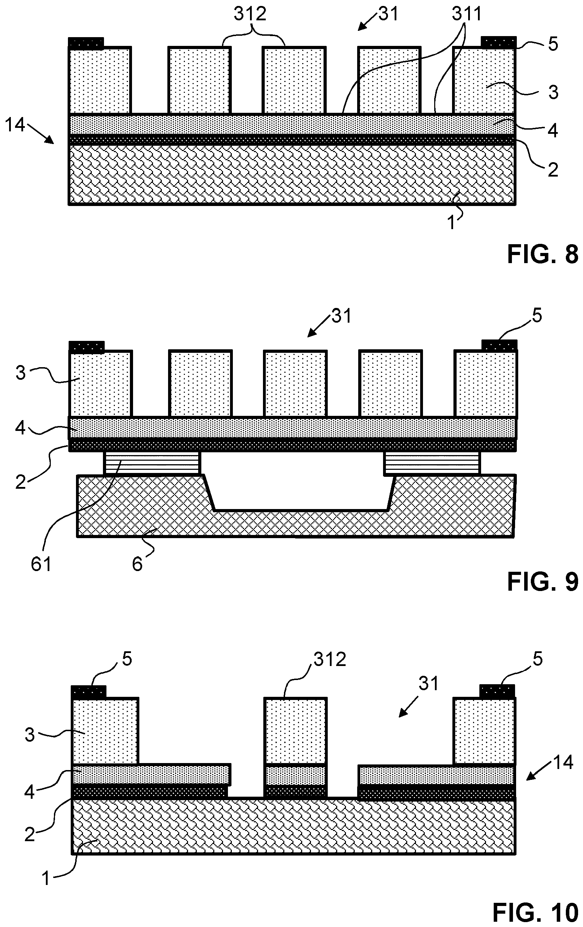

After the electrochemical delamination of the laminate 14, the sample comprising the nano- or micro-sheet layer 2, the polymer layer 4, the support layer 3 and the spacer elements 5 is transferred to a target substrate 6, as it is shown for other types of samples in e.g. figures 10, 11 and 12. By means of the pattern 31, the sample can easily be positioned and aligned with the target substrate 6 by means of an image recognition and alignment system 16 (see figure 16) without any further measures. In doing so, the nano- or micro sheet layer 2 is attached directly to the front surface of the target substrate 6. For the attachment of the nano- or micro sheet layer 2 to the target substrate 6, thermal annealing is preferably applied.

As a next step in the production of the final device, the polymer layer 4 and the support layer 3 with the attached spacer elements 5 are removed from the nano- or micro-sheet layer 2. This can for example be achieved by means of rinsing with a suitable solvent or by thermal detachment. The final device with the nano- or micro-sheet layer 2 attached to the target substrate 6, but without the polymer layer 4, the support layer 3 and the spacer elements 5 is shown in figure 1c.

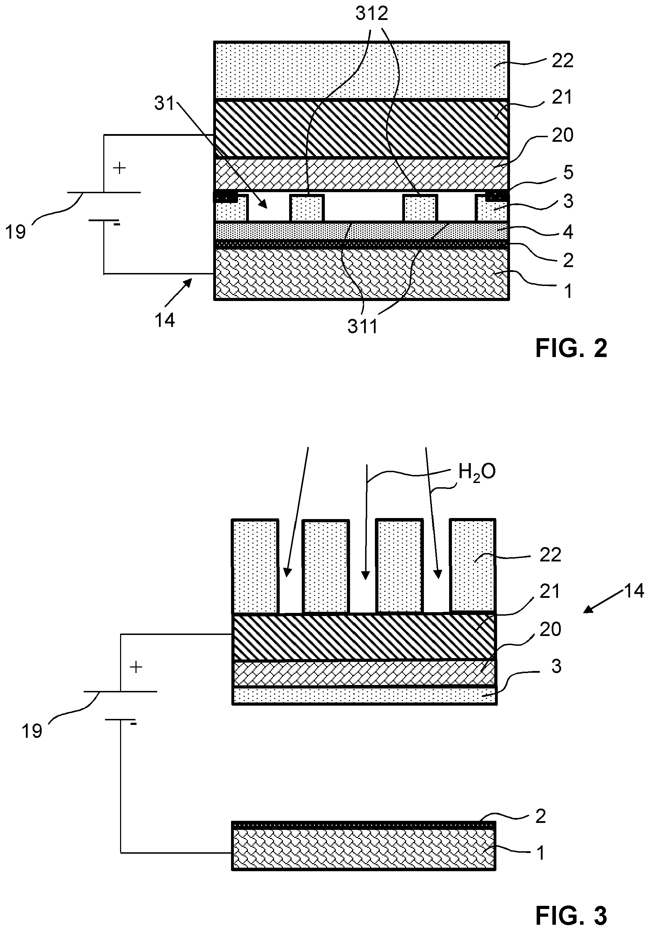

Figure 2 shows the electrochemical delamination for a different type of laminate 14. The laminate 14 of the embodiment of figure 2 differs from the one of figures 1a,b by the design of the pattern 31. As can be seen from the cross-sectional view of figure 2, the support layer 3 has a pattern 31, which is formed by a plurality of local depressions 311 and elevations 312, which depressions 311 are here through-going in each case. Thus, each of the depressions 311 extend from the rear surface to the front surface of the support layer 3. The depressions 311 and elevations 312 can be, but do not need to be, regularly distributed over the surface of the support layer 3. The bottoms of the depressions 311 are formed by the front surface of the polymer layer 4 in this embodiment.

Figure 3 shows another variant of the method step of the electrochemical delamination, which does not use an electrolyte in liquid form. Instead, a polymer electrolyte membrane 20 is also used here, which is attached to the front surface of the support layer 3. The support layer 3 can, but does not need to have a pattern 31 on its front surface. On the front surface of the electrolyte membrane 20, an anodic gas diffusion electrode 21 is arranged. Towards its upper side, the anodic gas diffusion electrode 21 is attached to a holder 22. The holder 22 is made of a soft or rigid material, such as polydimethylsiloxane (PDMS) and has a certain porosity and/or permeability, such that water (H₂O) can pass through the holder 22. Thus, the water can pass from the environment through the holder 22, and the hydrogen ions generated at the anodic gas diffusion electrode 21 pass through the electrolyte membrane 20.

It is noted that for illustrative purposes only, the support layer 3 and the nano- or micro sheet layer 2 are shown at a distance from each other in figure 3. At least during the actual electrochemical delamination, however, the support layer 3 and the nano- or micro sheet layer 2 are attached to each other.

For carrying out the electrochemical delamination by means of electrolysis, a water (H₂O)-source is provided to the holder 22 and an electric voltage is applied by means of a power supply 19 between the anodic gas diffusion electrode 21 and the growth substrate 1, which is made of copper (Cu) and forms the cathode. The voltage difference between anode and cathode causes the water molecules (H₂O) to split into hydrogen ions (H⁺) and oxygen (O). As a result, oxygen gas is generated at the anode, i.e. at the anodic gas diffusion electrode 21. The hydrogen ions pass through the anodic gas diffusion electrode 21 and the polymer electrolyte membrane 20 and the support layer 3 and the nano- or micro sheet layer 2. At the growth substrate 1 and in particular at the interface between the growth substrate 1 and the nano- or micro-sheet layer 2, the hydrogen gas is formed. The generation of such hydrogen gas bubbles causes the growth substrate 1 to separate from the nano- or micro-sheet layer 2, meaning that the laminate 14 is delaminated in a dry manner, wherein the laminate 14 remains under dry conditions and does not require to be immersed in an electrolyte.

In an alternative method, hydrogen gas (H₂) as a source at the holder 22 and connecting the anodic gas diffusion electrode 21 and the growth substrate 1 to an electrical load results in the generation of the hydrogen ions at the gas diffusion electrode 21, which diffuse through the polymer membrane 20 and the support layer 3 and the nano- or micro sheet layer 2. At the growth substrate 1, the hydrogen ions react with oxygen ions to form water, which results in the separation of the nano- or micro sheet layer 2.

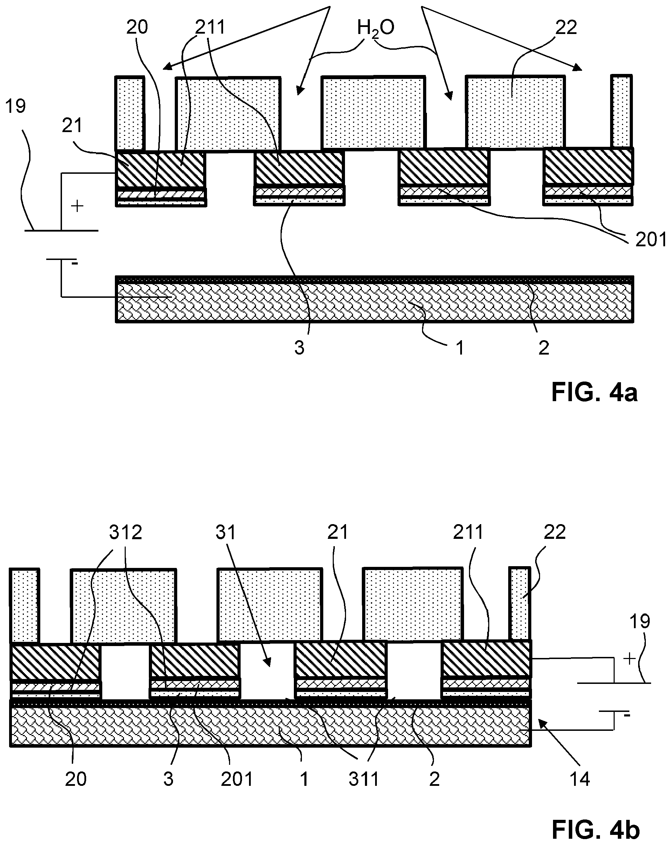

Figures 4a and 4b show a different type of laminate 14 prior and during electrochemical delamination. In the embodiments of figures 4a and 4b, the support layer 3 comprises a pattern 31 with through-going depressions 311 and elevations 312, which pattern 31 corresponds to the designs of both the polymer electrolyte membrane 20 and the anodic gas diffusion electrode 21. Both the polymer electrolyte membrane 20 and the anodic gas diffusion electrode 21 comprise through-going apertures that are directly aligned with the through-going depressions 311 of the pattern 31 of the support layer 3. Due to these apertures, the polymer electrolyte membrane 20 and the anodic gas diffusion electrode 21 can comprise different parts, which are completely separated from each other. The different parts of the polymer electrolyte membrane 20 and the anodic gas diffusion electrode 21, which are thus not connected with each other, are here referred to as membrane elements 201 and anode elements 211, respectively.

As can be seen from figures 4a and 4b the holder 22 has a design that also corresponds to the pattern 31 of the support layer 3 and, thus, to the designs of both the polymer electrolyte membrane 20 and the anodic gas diffusion electrode 21, in the sense that a through-going aperture or molecular transmission region is associated to each depression 311 of the support layer 1 and to each aperture of the polymer electrolyte membrane 20 and the anodic gas diffusion electrode 21.

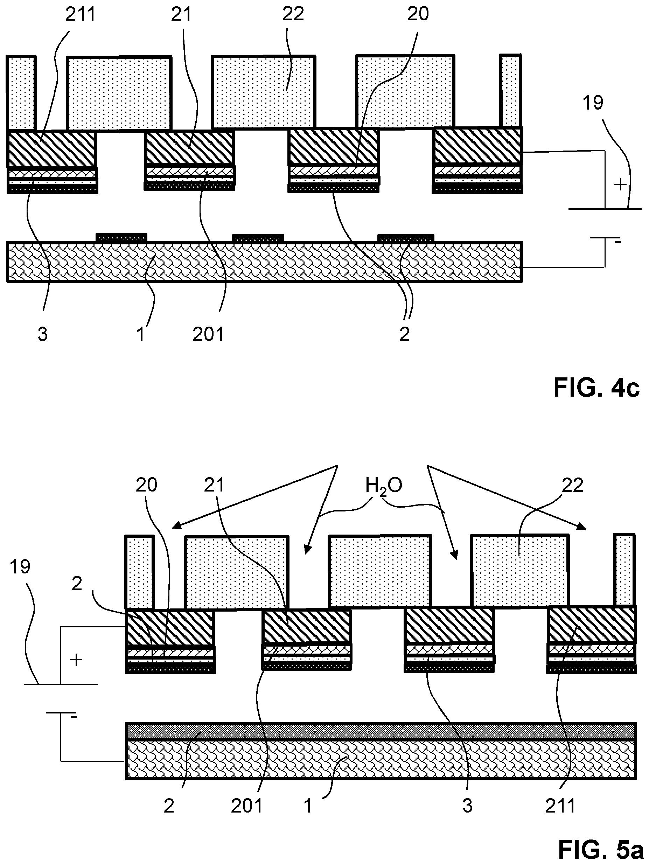

Due to the apertures of the polymer electrolyte membrane 20 and the anodic gas diffusion electrode 21, the separation of the nano- or micro-sheet layer 2 from the growth substrate 1 is only effected in certain well-defined regions, i.e. in the regions outside of these apertures. As a result and as can be seen in figure 4c, certain parts of the nano- or micro-sheet layer 2 remain on the growth substrate 1, while other parts are detached from the growth substrate 1 and transferred to a target substrate 6.

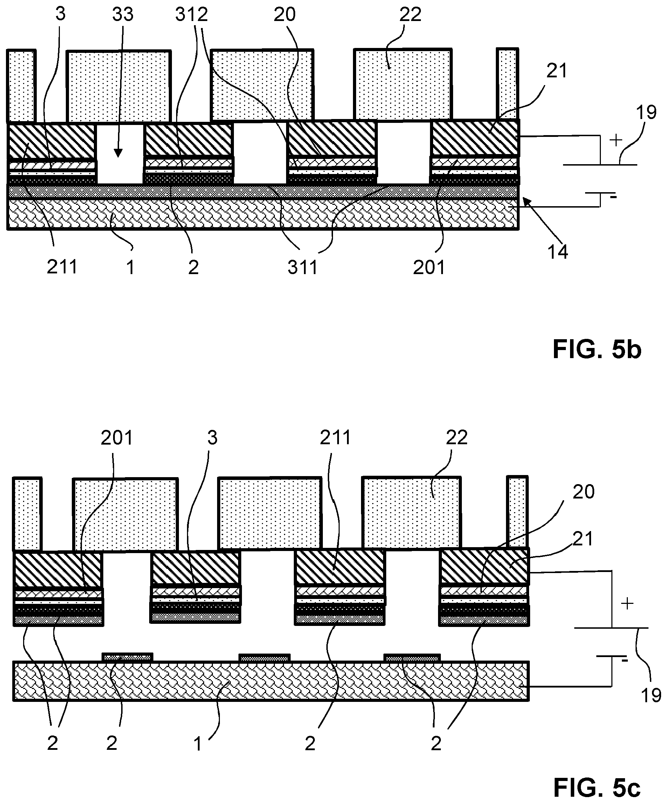

Figures 5a, 5b and 5c show a further embodiment, which differs from the one of figures 4a- 4c by having a nano- or micro-sheet layer 2 that comprises two sublayers. As can be seen in figure 5a, the first sublayer is attached to the entire front surface of the growth substrate 1. The second sublayer can e.g. be pre-fabricated and is attached to the side of the support layer 3 that faces the first sublayer. The second sublayer has a design with through-going apertures, in particular with completely separated parts, which corresponds to the pattern 31 of the support layer 3. By attaching the holder 22 with the anodic gas diffusion electrode 21, the polymer electrolyte membrane 20, the support layer 3 and the second sublayer of the nano- or micro-sheet layer 2 to the growth substrate 1 with the first sublayer of the nano- or micro-sheet layer 2 (figure 5b), a stacked heterostructure with two sublayers is formed for the nano- or micro-sheet layer 2. The two sublayers can e.g. be made of different material, in order to fulfil different functions for example. As can be seen in figure 5c, the separation of the first sublayer of the nano- or micro-sheet layer 2 from the growth substrate 1 can be restricted to the areas of the second sublayer only by means of a respective design of the polymer electrolyte membrane 20 and the anodic gas diffusion electrode 21.

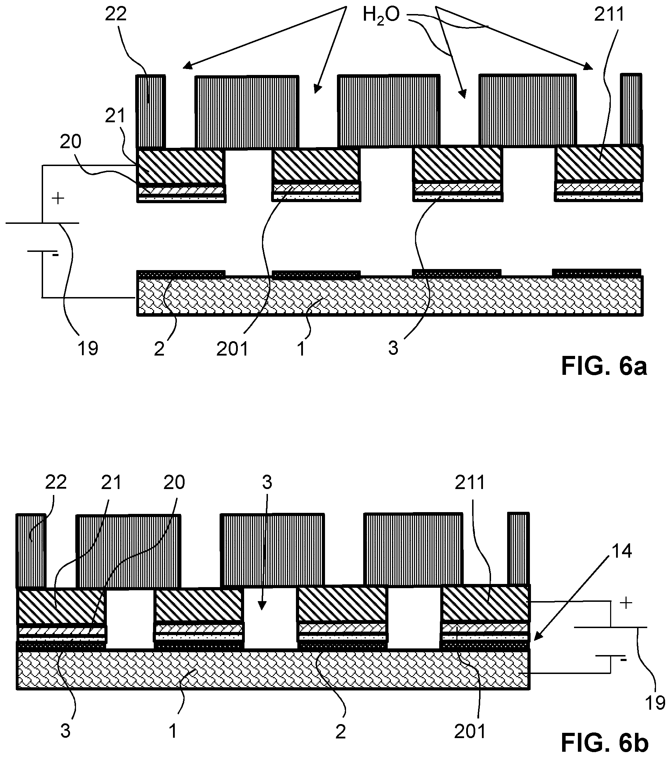

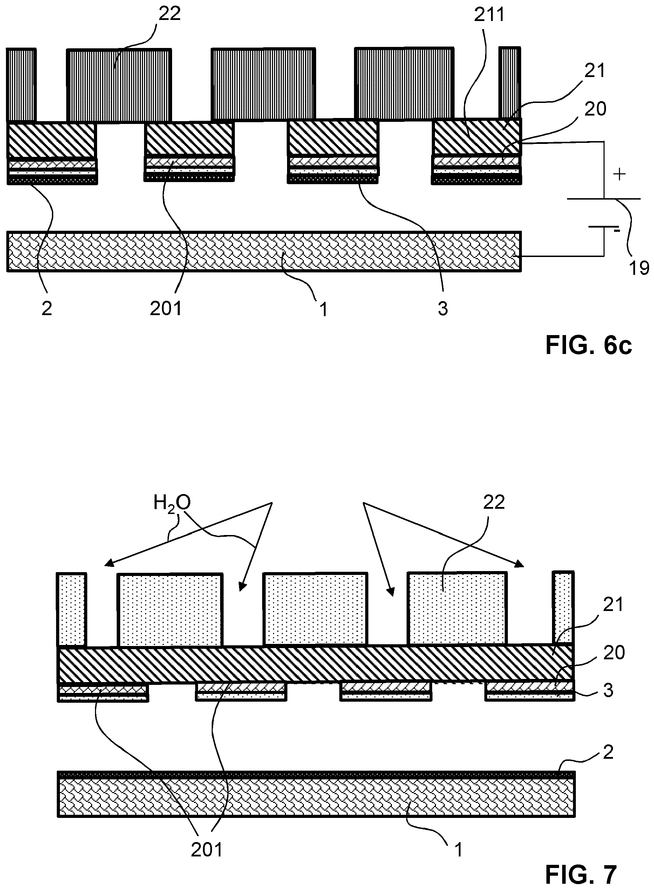

The embodiment of figures 6a, 6b and 6c differs from the one of figures 4a, 4b and 4c by the design of the nano- or micro-sheet layer 2, which here corresponds to the pattern 31 of the support layer 3. As can be seen in figures 6a and 6b, the nano- or micro-sheet layer 2 is pre-patterned. The different parts of the nano- or micro-sheet layer 2 can be connected or separate from each other. Each part alone or the totality of all parts of the nano- or micro-sheet layer 2 can form a single nano- or micro-sheet element.

In figure 7, an embodiment is shown in a status prior to delamination, which embodiment corresponds to the one of figure 4a, except for the design of the anodic gas diffusion electrode 21. In the present embodiment, the anodic gas diffusion electrode 21 extends with a uniform thickness over the entire surface of the nano- or micro-sheet layer 2. The polymer electrolyte membrane 20, however, has the same design as the membrane 20 of figure 4a. Due to the apertures of the polymer electrolyte membrane 20 in the embodiment of figure 7, the delamination is effected is the same way as shown in figure 4c, i.e. the nano- or micro-sheet layer 2 is separated from the growth substrate 1 only in certain well-defined regions, i.e. in the regions outside of these apertures.

Figure 8 shows a further variant of a laminate 14 in a state prior to electrochemical delamination. The laminate 14 is identical to the one shown in the lower part of figure 1a, except for the pattern 31 of the support layer 3. In the present case, the pattern 31 is formed by a plurality of local elevations 312 and depressions 311, which are here through-going in each case, meaning that they each extend from the rear surface to the front surface of the support layer 3. The local elevations 312 and depressions 311 are regularly distributed over the surface of the support layer 3. The bottom of the depressions 311 is formed by the front surface of the polymer layer 4 in this embodiment. The pattern 31 can for example have the function of a marking, in order to facilitate the transfer and the correct positioning of the support layer 3 and the nano- or micro-sheet layer 2 onto a target substrate later on.

Figure 9 shows a variant, in which the nano- or micro-sheet layer 2 is already separated from the growth substrate 1 after carrying out the electrochemical delamination as described. As can be seen in figure 9, the nano- or micro-sheet layer 2, together with the attached polymer layer 4 and the support layer 3, has been transferred and is now attached to the target substrate 6. In the present case, electrical contacts 61 are provided on the front surface of the target substrate 6, which electrical contacts 61 in each case form a local elevation in the front surface of the target substrate 6. Between the electrical contacts 61, the target substrate 6 forms a depression. The sample is placed such on the target substrate 6, that the nano- or micro-sheet layer 2 is spanned over the depression between the electrical contacts 61. As a consequence, the nano- or micro-sheet layer 2 contacts only the electrical contacts 61 of the target substrate 6, but no other parts. In other words, the nano- or micro-sheet layer 2 is here suspended over the depression of the target substrate 6 formed between the electrical contacts 61.

Figure 10 shows another variant of a laminate 14 in a state before carrying out the electrochemical delamination as described. The laminate 14 of figure 10 differs from the one of figure 8 by the structured configurations of the nano- or micro-sheet layer 2 and of the polymer layer 4. Both of these layers comprise a design with local elevations and depressions. The depressions are through-going depressions in each case meaning that within the depressions, the front surface of the growth substrate 1 is exposed to the outside. The elevations formed by the nano- or micro-sheet layer 2 can, but do not need to be, connected. The support layer 3 is here patterned in such a way, that also parts of the front surface of the polymer layer 4 are exposed to the outside.

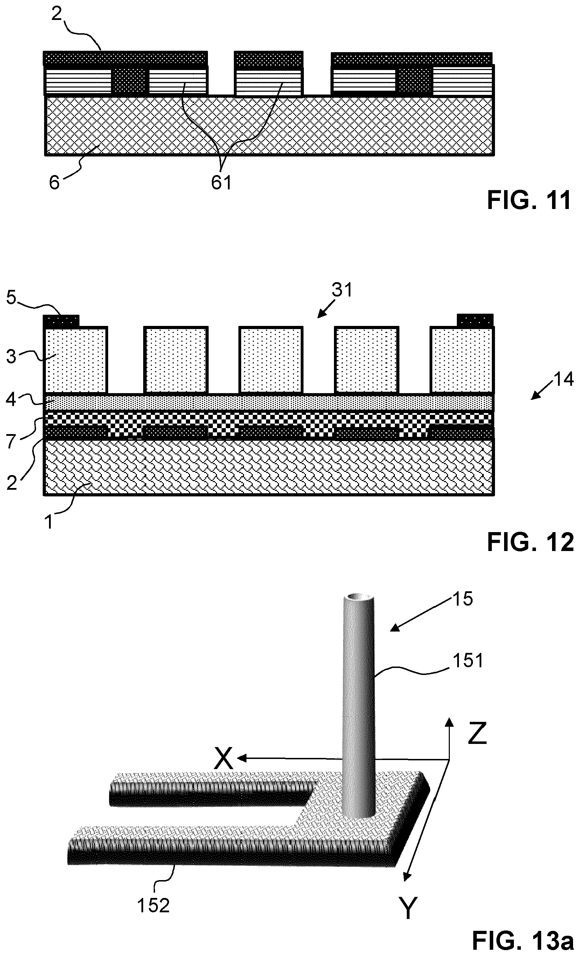

Figure 11 shows another variant, in which the nano- or micro-sheet layer 2 is already separated from the growth substrate 1 and transferred to a target substrate 5 comprising electrical contacts 61 after carrying out the electrochemical delamination as described. In the final device shown in figure 11, the electrical contacts 61 are contacted and connected by a nano- or micro-sheet element, which is formed by the nano- or micro sheet layer 2. As can be seen, the nano- or micro-sheet layer 2 is such applied to the target substrate 6, that it follows the structured front surface of the target substrate 6. Thus, the nano- or micro-sheet layer 2 not only rests on the local elevations formed by the electrical contacts 61, but also on the bottom of the depressions between the electrical contacts 61. Due to the design of the nano- or micro-sheet layer 2, however, some depressions of the target substrate 6 are not covered, meaning that each electrical contacts 61 does not necessarily need to be connected to all other electrical contacts 61.

Figure 12 shows a further variant of a laminate 14 in a state before carrying out the electrochemical delamination as described. An insulator layer 7 is here arranged between the nano- or micro-sheet layer 2 and the polymer layer 4. The insulator layer 7 extends into through-going apertures formed by the nano- or micro-sheet layer 2 in such a way that the apertures are completely filled out by the insulator layer 7.

Figure 13a shows a first version of a pickup element in the form of a forklift 15 used for transferring the nano- or micro-sheet layer 1 and, if present, the support layer 3 and the polymer layer 4 after delamination from the growth substrate 1 to the target substrate 6. Instead of a forklift, any other pickup element could be used for the same purpose. The forklift 15 comprises a fork element 152, which is C-shaped and extends in a horizontal direction. A vertically extending support bar 151 is attached to the fork element 152, which serves to hold and move the fork element 152 along all three directions X, Y and Z in space. The support bar 151 is attached with its upper end to a respective handling device, such as e.g. a robot arm, not shown in the figure.

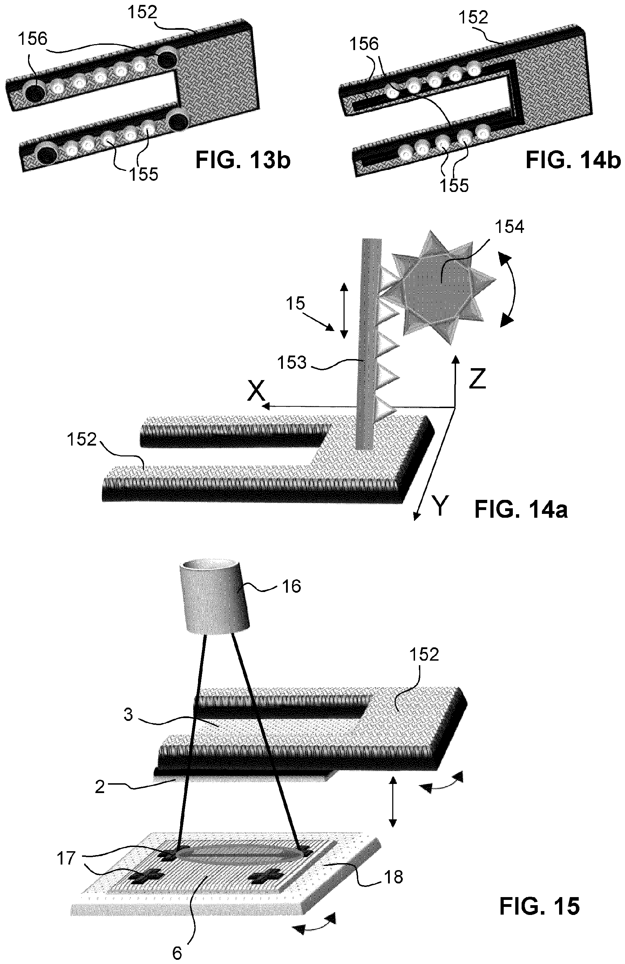

The fork element 152 serves to contact, pick-up, transfer and place a sample comprising the nano- or micro-sheet layer 2 together, if present, with the support layer 3 and the polymer layer 4 after delamination. For transferring the sample, the fork element 152 can be moved underneath or on top of the sample and then lifted, in order to carry the sample on the upper side of the fork element 152. Preferred, however, is an embodiment of the forklift 15 with air suction elements 155 and/or electromagnetic elements 156 at the underside of the fork element 152, as shown in figure 13b. The air suction elements 155 and/or the electromagnetic elements 156 can be activated, in order to attract and hold the sample. For placing the sample on the target substrate 6, the air suction elements 155 and/or the electromagnetic elements 156 are deactivated again. In order to be attractable by the electromagnetic elements 156, the sample comprises ferromagnetic parts, for example in the form of ferromagnetic pickup elements attached e.g. to the upper side of the support layer 3. By means of the air suction elements 155 and/or the electromagnetic elements 156, the transfer of the sample can be carried out in a fast way, without damaging the sample.

A second version of a forklift 15 is shown in figures 14a and 14b. The fork element 152 is here attached to a vertically extending gear rack 153 that is engaged by a gear wheel 154. By rotating the gear wheel 154, which can be a part of a respective motorized handling device, the forklift 15 can be moved along the vertically extending Z-direction. At the underside of the fork element 152, a plurality of air suction elements 155 as well as an electromagnetic element 156 in the form of a C-shaped magnetic strip are provided.

Figure 15 shows the step of aligning the sample comprising the nano- or micro-sheet layer 2 correctly with the target substrate 6 by means of an image recognition and alignment system 16. For this purpose, the image recognition and alignment system 16 comprises a camera, e.g. a CCD-camera, that captures the top surface of the target substrate 6 as well as the position and orientation of the forklift element 152 with the nano- or micro-sheet layer 2 and the support layer 3. With the help of e.g. the pattern 31 of the support layer 3 and optional alignment markers 17 provided on the target substrate 6, the fork element 152 is moved such by a controller that the nano- or micro-sheet layer 2 is aligned correctly and placed on the target substrate 6.

For affixing the nano- or micro-sheet layer 2 by means of thermal annealing, the target substrate 6 can be positioned on a heat plate 18, which can be heated for this purpose.

For approaching the nano- or micro-sheet layer 2 to the target substrate 6 and/or for aligning these two elements, the heat plate 18 or another device holding the target substrate 6 can be moveable as well. For example, the heat plate 18 can be rotatable about a vertical axis as it is shown with a double arrow in figure 15. Moreover, the heat plate 18 could for example be movable along the vertical Z-axis and/or along the X- and/or the Y-axis as well.

The invention is of course not limited to the preceding presented embodiments and a plurality of modifications is possible. For example, the support layer 3 and/or the polymer layer 4 could well be omitted in all embodiments. Elements disclosed with respect to different embodiments can be exchanged, omitted or added. A plurality of further modifications is possible.

**LIST OF REFERENCE SIGNS**

| | | | |
|---|---|---|---|
| 1 | Growth substrate | 154 | Gear wheel |
| 2 | Nano- or micro-sheet layer | 155 | Air suction element |
| 3 | Support layer | 156 | Electromagnetic element |
| 31 | Pattern | | |
| 311 | Depression | 16 | Image recognition and |
| 312 | Elevation | | alignment system |
| 4 | Polymer layer | 17 | Alignment marker |
| 5 | Spacer element | 18 | Heat plate |
| 6 | Target substrate | 19 | Power supply |
| 61 | Electrical contact | 20 | Polymer electrolyte membrane |
| 7 | Insulator layer | 201 | Membrane element |
| 14 | Laminate | 21 | Anodic gas diffusion electrode |
| 15 | Forklift | 211 | Anode element |
| 151 | Support bar | 22 | Holder |
| 152 | Fork element | | |
| 153 | Gear rack | H₂O | H₂O flow |

## Claims

1. A method for producing a nano- or micro-sheet element, the nano- or micro-sheet element particularly being made of graphene and/or other sheet-materials, on the basis of a laminate (14) comprising at least a growth substrate (1) and a nano- or micro-sheet layer (2), the nano- or micro-sheet layer (2) being adapted to form the nano- or micro-sheet element,
wherein the method comprises at least the step of electrochemical delamination of the laminate (14) by means of electrolysis in such a way, that the growth substrate (1) is separated from the nano- or micro-sheet layer (2),
**characterized in that**
in the electrochemical delamination of the laminate (14), a gas diffusion electrode (21) attached to the nano- or micro-sheet layer (2) is used as an anode and an electrolyte membrane, in particular a polymer electrolyte membrane (20), is arranged between the gas diffusion electrode (21) and the nano- or micro-sheet layer (2).

2. The method according to claim 1, wherein the electrolyte membrane (20) is directly attached to the gas diffusion electrode (21).

3. The method according to claims 1 or 2, wherein the electrolyte membrane (20) has a design with at least two separate membrane elements (201) corresponding to the design of the nano- or micro-sheet element.

4. The method according to one of the preceding claims, wherein the gas diffusion electrode (21) has a design with at least two separate anode elements (211) corresponding to the design of the nano- or micro-sheet element.

5. The method according to one of the preceding claims, wherein a holder (22) is attached to the gas diffusion electrode (21) during the electrochemical delamination of the laminate (14), the holder (22) having a porosity and/or permeability, in order to allow a liquid, in particular water, to pass through the holder (22) to the gas diffusion electrode (21).

6. The method according to one of the preceding claims, wherein the growth substrate (1) forms the cathode during the electrochemical delamination of the laminate (14).

7. The method according to one of the preceding claims, wherein an electrolysis of water is carried out during the electrochemical delamination of the laminate (14).

8. The method according to one of the preceding claims, wherein, after the step of electrochemical delamination, the nano- or micro-sheet layer (2) is transferred to a target substrate (6).

9. The method according to claim 8, wherein the transfer of the nano- or micro-sheet layer (2) to the target substrate (6) is carried out by means of a forklift (15), which preferably comprises magnetic elements (156) and/or air suction elements (155) for picking up the nano- or micro-sheet layer (2).

10. The method according to one of the preceding claims, wherein the laminate (14) additionally comprises a support layer (3), and wherein the step of electrochemical delamination of the laminate (14) is carried out with the support layer (3) having a pattern (31) with a plurality of local depressions (311) and/or elevations (312).

11. The method according to claim 10, wherein, after the step of electrochemical delamination, the nano- or micro-sheet layer (2) and the support layer (3) are transferred to a target substrate (6), and wherein for the transfer, the pattern (31) of the support layer (3) is used to align the nano- or micro-sheet layer (2) with the target substrate (6).

12. The method according to one of claims 10 and 11, wherein the nano- or micro-sheet layer (2) has a design, which corresponds to the pattern (31) of the support layer (3).

13. The method according to one of the preceding claims,
wherein the nano- or micro-sheet layer (2) is a heterostructure formed by a stack of a plurality of sublayers, and/or
wherein the nano- or micro-sheet element is a heterostructure formed by a stack of a plurality of sublayers and the method comprises the further step of stacking the nano- or micro-sheet layer (2) on at least one other nano- or micro-sheet layer (2).
